(19) Europäisches Patentamt
European Patent Office
Office européen des brevets

(11) EP 3 554 851 B1

# (12) FASCICULE DE BREVET EUROPEEN

(45) Date de publication et mention de la délivrance du brevet:
**11.11.2020 Bulletin 2020/46**

(21) Numéro de dépôt: **17825904.0**

(22) Date de dépôt: **15.12.2017**

(51) Int Cl.:
***B60C 1/00*** *(2006.01)* ***C08F 236/06*** *(2006.01)*
***C08F 236/10*** *(2006.01)* ***C08K 5/3415*** *(2006.01)*
***C08F 224/00*** *(2006.01)*

(86) Numéro de dépôt international:
**PCT/FR2017/053597**

(87) Numéro de publication internationale:
**WO 2018/109413 (21.06.2018 Gazette 2018/25)**

## (54) PROCÉDÉ DE SYNTHÈSE D'UN POLYMÈRE PORTEUR DE GROUPEMENTS FURANE, PRODUIT ISSU DE CE PROCÉDÉ ET COMPOSITION LE CONTENANT.

VERFAHREN ZUR SYNTHESE EINES POLYMERS MIT FURANGRUPPEN, MIT DIESEM VERFAHREN GEWONNENES PRODUKT UND ZUSAMMENSETZUNG DAMIT

METHOD FOR THE SYNTHESIS OF A POLYMER COMPRISING FURANE GROUPS, PRODUCT OBTAINED BY SAID METHOD AND COMPOSITION CONTAINING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2016 FR 1662482**

(43) Date de publication de la demande:
**23.10.2019 Bulletin 2019/43**

(73) Titulaire: **Compagnie Générale des Etablissements Michelin**
**63000 Clermont-Ferrand (FR)**

(72) Inventeur: **MATMOUR, Rachid**
**63040 Clermont-Ferrand Cedex 9 (FR)**

(74) Mandataire: **Le Cam, Véronique Marie Christine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**JP-A- 2001 294 621** **JP-A- 2008 056 888**
**SU-A1- 539 902**

- **JING BAI ET AL: "An Eco-Friendly Scheme for the Cross-Linked Polybutadiene Elastomer via Thiol-Ene and Diels-Alder Click Chemistry", MACROMOLECULES, vol. 48, no. 11, 9 juin 2015 (2015-06-09), pages 3539-3546, XP055393786, US ISSN: 0024-9297, DOI: 10.1021/acs.macromol.5b00389**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne la synthèse des polymères porteurs de groupements fonctionnels susceptibles de former des réseaux polymères thermoréversibles. La présente invention concerne également de tels polymères et les compositions les contenant.

Nombreux produits sont fabriqués à partir de polymères diéniques qui, à la cuisson, sont réticulés entre eux. L'utilisation de polymères diéniques, notamment à base de butadiène, pour la fabrication de ces produits est souvent associée à une vulcanisation, réticulation au moyen du soufre. Il se forme alors des liaisons covalentes très fortes entre les chaînes de polymères qui contribuent aux propriétés mécaniques du produit fini, notamment sa rigidité.

La force des liaisons covalentes qui se forment lors de la réticulation de polymères peut néanmoins induire des inconvénients lors de l'utilisation et le traitement ultérieur du produit fini. Ainsi, par exemple, l'énergie nécessaire pour briser ces liaisons peut constituer un frein à la récupération des chaînes polymères libres non réticulées dans un processus de recyclage plus global des matériaux constituant le produit fini.

C'est une des raisons qui poussent la recherche et le développement dans le domaine de la réticulation thermoréversible des polymères en vue d'élaborer des matériaux polymères recyclables, ouvrant en outre des perspectives d'utilisation innovante dans le domaine des produits finis du faits de propriétés auto-cicatrisantes ou auto-obturantes de ces matériaux polymères.

La littérature comporte de nombreuses références à la formation de réseaux réticulés thermoréversibles, qui sous l'effet de la température conduisent à des chaînes polymères non réticulées. Un moyen pour parvenir à des polymères réticulables de manière thermoréversible est la modification chimique des polymères afin de porter au sein de leurs chaînes des groupements qui interagissent entre eux de manière réversible. L'utilisation du principe de réaction Diels-Adler pour créer des réseaux réticulés thermoréversible est un des moyens le plus décrit. La réaction de Diels-Adler est une cycloaddition entre un composé diène et un composé diénophile. Le produit de cette réaction est un composé thermosensible qui par réaction de retro-Diels-Adler peut à nouveau régénérer les réactifs de départ.

Dans le cadre de la synthèse de polymères diéniques, il convient bien entendu que les propriétés après modification restent adaptées à leur utilisation première, notamment les propriétés mécaniques et dynamiques.

Un groupe de l'Université de Shanghai a appliqué la réaction de Diels-Alder sur des polybutadiènes fonctionnalisé furane le long de la chaîne (Macromolecules, 2015, 48 (11), pp 3539-3546). Les auteurs ont utilisé des polybutadiènes commerciaux pour les modifier le long de la chaîne en présence de thiol fonctionnel furane par greffage radicalaire. Les polymères fonctionnels furane ont ainsi été réticulés par réaction de Diels-Alder à l'aide d'un bis-maléimide comme agent réticulant. Les auteurs mettent en avant la recyclabilité du matériau du fait de la réversibilité de la réticulation, sans sacrifier aux propriétés de celui-ci.

Un groupe universitaire américain en collaboration avec l'US Army Research Laboratory a appliqué la réaction de Diels-Alder à des polybutadiènes téléchéliques furane (Macromolecules 2010, 43, 6135 et US2010/0099798A1). Les auteurs ont utilisé un prépolymère commercial de polybutadiène dihydroxy téléchélique pour le modifier en bout de chaîne en présence de dérivés isocyanate fonctionnel furane. Les polymères fonctionnels furane ont ainsi été réticulés par réaction de Diels-Alder à 60°C avec une réversiblité du système observée à 90°C.

Un inconvénient de ces deux procédés de synthèse réside dans la nécessité de modifier le polymère postérieurement à sa synthèse au moyen d'une étape de greffage, ce qui implique ainsi au moins une étape complémentaire dans un procédé de synthèse plus global.

Dans cette perspective d'obtenir un polymère portant des groupements furane, le groupe universitaire américain doit également disposer d'un polybutadiène téléchélique dihydroxy comme polymère de départ. En fonction de l'application visée du polymère fonctionnel furane et de la disponibilité commerciale des réactifs, sachant que seuls des polybutadiènes téléchéliques dihydroxy de faible masse moléculaire sont disponibles commercialement, ce procédé implique éventuellement la synthèse préalable des polymères téléchélique dihydroxy.

Par conséquent, le problème technique qui se pose par rapport à l'art antérieur est de pouvoir fournir un procédé qui permet la synthèse d'un polymère diénique portant un ou plusieurs groupements furane qui pallie les inconvénients des procédés antérieurs en tenant compte des contraintes en matière de propriétés liées à l'utilisation du polymère.

Plus particulièrement, les inventeurs se sont donnés pour mission de proposer un procédé de synthèse simple, qui permet d'obtenir un polymère diénique portant un ou plusieurs groupements furane, substitué ou non, au sein de sa chaîne et présentant des propriétés chimiques et physiques l'autorisant à être utilisé pour la préparation de compositions de caoutchouc entrant dans la fabrication de produits finis tels que les tuyaux, les courroies, les pneumatiques, les semelles de chaussures, les articles chirurgicaux...

La présente invention permet de résoudre le problème technique en proposant un procédé de synthèse d'un polymère porteur d'un ou plusieurs groupements fonctionnels furane, substitué ou non, , lequel procédé permet d'introduire de manière simple et contrôlée un ou plusieurs groupements fonctionnels furane, substitués ou non, au sein de la chaîne polymère, en limitant les étapes du procédé de synthèse et en s'affranchissant de la contrainte liée à la disponibilité commerciale de certains réactifs.

En outre la présente invention permet de synthétiser un polymère porteur d'un ou plusieurs groupements fonctionnels furane, substitués ou non, au sein de sa chaîne dont les caractéristiques physico-chimiques sont compatibles avec une mise en œuvre dans un vaste domaine d'utilisation de la caoutchouterie.

Ainsi, l'invention a pour objet un procédé de synthèse d'un polymère porteur d'au moins un groupement fonctionnel furane, substitué ou non, au sein de la chaîne polymère, lequel procédé comprend la copolymérisation radicalaire d'au moins deux monomères, l'un étant un monomère diène conjugué et l'autre un monomère porteur d'un groupement furane.

L'invention a également pour objet le polymère diénique, porteur d'au moins un groupement fonctionnel furane, substitué ou non, au sein de la chaîne polymère susceptible d'être obtenu par un tel procédé de synthèse.

Un autre objet de l'invention est un réseau de réticulation réversible par réaction du polymère diénique portant un ou plusieurs groupements fonctionnels furane avec un diénophile multifonctionnel.

Un autre objet de l'invention est une composition de caoutchouc à base au moins du polymère diénique porteur d'au moins un groupement fonctionnel furane, substitué ou non, au sein de sa chaîne.

L'invention concerne aussi un produit fini dont un de ses éléments constitutifs comprend la composition de caoutchouc conforme à l'invention. A titre de produit fini on peut citer les tuyaux, les courroies, les pneumatiques, les semelles de chaussures, les articles chirurgicaux...

## I. DESCRIPTION DETAILLEE DE L'INVENTION :

Dans la présente description, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes 'strictes a et b). Lorsqu'on désigne "de a à b", ceci comprends également l'intervalle représenté par l'expression "entre a et b".

Dans la présente description, on entend par " au moins un groupement " ou " au moins une fonction " respectivement un ou plusieurs groupements ou une ou plusieurs fonctions. Dans la présente description, les expressions "fonction furane" et "groupement furane" sont équivalentes.

Dans la présente description, l'expression "groupement au sein de la chaîne polymère", s'entend comme un groupement pendant situé le long de la chaîne polymère et relié à celle-ci par un seul point, y compris les extrémités de la chaîne. Ainsi, le groupement terminal est inclus dans cette définition. L'expression " groupement terminal " s'entend comme étant un groupement situé en une extrémité de chaîne du polymère selon la définition donnée par IUPAC, PAC, 1996, 68, 2287.

Dans la présente description, l'expression "polymère fonctionnel furane, substitué ou non,", s'entend comme un polymère diénique portant au moins un groupement fonctionnel furane, substitué ou non, au sein de sa chaîne.

Dans la présente description, l'expression "unité monomère", qu'il soit diène ou autre, s'entend comme une unité du polymère issue du monomère en question ou de plusieurs de ces monomères.

Il convient de noter que dans le cadre de l'invention, les monomères utilisés peuvent être d'origine fossile ou biosourcée. Dans ce dernier cas, ils peuvent être partiellement ou totalement issus de la biomasse ou obtenus à partir de matières premières renouvelables issues de la biomasse.

L'invention a donc pour objet un procédé de synthèse d'un polymère porteur d'au moins un groupement fonctionnel furane au sein de la chaîne polymère, lequel procédé comprend la copolymérisation radicalaire d'au moins deux comonomères A et B, le comonomère A étant un monomère diène et le comonomère B étant choisi parmi le méthacrylate de furfuryle et l'acrylate de furfuryle.

Le procédé de polymérisation radicalaire peut être mis en œuvre en solution, en suspension ou en émulsion, en continu ou discontinu dans un batch alimenté ou dans un réacteur fermé. Selon la répartition des monomères souhaitée et selon la réactivité des monomères dans le mélange réactionnel, l'homme du métier adaptera les conditions de polymérisation, notamment pour conduire à une copolymérisation statistique qui constitue un mode de réalisation préférentielle de l'invention. Quel que soit le type de polymérisation radicalaire, les monomères, l'amorceur de polymérisation ainsi que les autres constituants du milieu de polymérisation peuvent être introduits dans le réacteur en une seule charge au début de la polymérisation ou de manière continue ou séquencée tout au long de la polymérisation.

Selon un mode réalisation préférée de l'invention, la synthèse du polymère fonctionnel furane est réalisée par polymérisation radicalaire en émulsion afin de favoriser l'uniformité de la taille des chaînes et l'obtention de chaines macromoléculaires de haut poids moléculaires. La polymérisation radicalaire en émulsion est dans son principe général connue de l'homme du métier, elle a été notamment appliquée à la polymérisation radicalaire en émulsion du butadiène et la copolymérisation radicalaire en émulsion du styrène et du butadiène (e-SBR), et est appliquée à la polymérisation radicalaire selon l'invention.

Selon l'un quelconque des modes de réalisation de l'invention, la polymérisation radicalaire est conduite à des températures variant de -10°C à 200°C, de préference de 0 à 100°C, avec éventuellement des changements de température graduels ou par pallier, la température étant choisie par l'homme du métier en tenant compte notamment de la réactivité du milieu de polymérisation et de sa concentration. La polymérisation radicalaire peut être conduite à des températures variant de 1 à 70°C, plus particulièrement de 5 à 60°C.

Selon l'un quelconque des modes de réalisation de l'invention, l'amorceur utilisé dans la polymérisation radicalaire est ajouté au mélange soit en totalité ou partiellement au début et/ou en continu ou de façon intermittente au cours de la polymérisation. De manière préférée, le ou les amorceurs représentent de 0,1 à 10 pce, de préférence de 0,2 à 10 pce, plus préférentiellement de 0,2 à 5 pce.

L'amorceur de polymérisation peut être tout amorceur de polymérisation radicalaire conventionnel, notamment à titre d'exemple un peroxyde organique tel que que le peroxyde d'hydrogène, le peroxyde de cyclohexanone, le peroxyde de benzoyle, le peroxyde de lauroyle, l'hydroperoxyde de tert-butyle, l'hydroperoxyde de cumène, l'hydroperoxyde de p-menthane, le peroxyde de di-tert-butyle et le peroxyde de dicumyle, des composés azoïques tel que l'azobisisobutyronitrile ou le dihydrochlorure de 2,2 '-azo-bis-(2-methylpropionamidino), des peroxydes inorganiques, comme le persulfate de potassium, sodium et d'ammonium.

Les amorceurs de polymérisation radicalaire peuvent également inclure les peracides et leurs esters tels que l'acide peracétique et le persulfate de potassium.

Les amorceurs de polymérisation radicalaire mentionnés ci-dessus peuvent également être utilisés dans des systèmes redox, dans lesquels des sels de métaux de transition, comme le sulfate ferreux ou le pyrophosphate de fer(II) sont impliqués. Ces sels de métaux de transition peuvent être éventuellement associés à des agents réducteurs. A titre d'agent réducteur, on peut citer le formaldéhyde-sulfoxylate de sodium dihydraté (Rongalit®), le mélange technique de di-sodium de 2-hydroxy-2-sulfinate, de di-sodium de 2-hydroxy-2-sulfonate et du sulfite de sodium (Bruggolite FF6® ou Bruggolite FF7®), le but-1-ène-3-ol, les sels d'hydroxylamine, le sodium dialkyldithiocarbamate, le bisulfite de sodium, le bisulfite d'ammonium, le dithionite de sodium, l'acide ascorbique, l'acide tartrique, l'acide érythorbique, l'acide borique, l'urée, l'acide formique. De manière préférée, le ou les sels de métaux de transition représentent de 0,01 à 10 pce, de préférence de 0,1 à 5 pce.

Chaque amorceur de polymérisation radicalaire peut être utilisé seul ou en combinaison avec au moins un autre amorceur de polymérisation radicalaire.

Selon l'un quelconque des modes de réalisation de l'invention, on peut aussi recourir à la polymérisation radicalaire contrôlée qui permet un degré élevé de contrôle de la macrostructure et de la microstructure du polymère. La polymérisation radicalaire contrôlée est connue de l'homme de l'art et décrite dans de nombreux ouvrages. Parmi les polymérisations radicalaires contrôlées, on dénombre par exemple la polymérisation radicalaire par transfert d'atomes (Atom Transfer Radical Polymerization en anglais, ATRP), la polymérisation radicalaire contrôlée par les nitroxides (Nitroxide Mediated Polymerization, NMP), la polymérisation radicalaire contrôlée par transfert de chaîne réversible par addition-fragmentation (Reversible Addition Fragmentation Transfer, RAFT).

Selon l'un quelconque des modes de réalisation de l'invention, des agents de transfert comme les mercaptans, en particulier le tert-dodécylmercaptan, le n-dodécylmercaptan ou comme le tétrachlorure de carbone ou encore le di- ou triterpène peuvent également être utilisés seuls ou en combinaison de deux ou plus.

Pour une polymérisation radicalaire conduite en émulsion, qui constitue un mode préférentiel de réalisation de l'invention, les tensioactifs employés peuvent être anioniques, cationiques, non ioniques ou des espèces amphotères. Ils peuvent être utilisés seuls ou en combinaison de deux ou plus. De manière préférée, le ou les agents tensioactifs représentent de 1 à 20 pce, de préférence de 1 à 10 pce, et encore plus préférentiellement de 1 à 5 pce.

A titre d'agents tensioactifs anioniques, on peut notamment citer tous les agents tensioactifs anioniques comprenant au moins un groupe alkyle en C6 -C40 ou au moins un cycle aromatique substitué par un groupe alkyle en C6 -C40, et au moins un groupe anionique choisi parmi les sulfates, les sulfonates, les phosphates, les phosphonates, et les carboxylates. On utilisera préférentiellement les tensioactifs choisis parmi les carboxylates, le sulfates et les sulfonates.

De préférence, le ou les agents tensioactifs anioniques comprenant au moins un groupe alkyle en C6 -C40 ou au moins un cycle aromatique substitué par un groupe alkyle en C6 -C40 sont choisis parmi le stéarate de sodium, le laurylsulfate de sodium, le résinate de sodium, le laurylether sulfate de sodium et les dodecylbenzene sulfonates de sodium et les mélanges de ces composés.

A titre d'agents tensioactifs cationiques, on peut notamment citer tous les agents tensioactifs cationiques comprenant au moins un groupe alkyle en C6 -C40 ou au moins un cycle aromatique substitué par un groupe alkyle en C6 -C40, et au moins un groupe cationique choisi parmi les ammoniums et les pyridiums.

De préférence, le ou les agents tensioactifs cationiques sont choisis parmi les sels d'alkyltrimethylammonium tels que le chlorure ou le bromure de trimethyldecylammonium, le chlorure d'hexadécyltriméthylammonium et les sels de benzalkonium et les mélanges de ces composés.

De manière préférée, le ou lesdits agents tensioactifs utilisables dans le procède selon l'invention sont choisis parmi le stéarate de sodium, le résinate de sodium, le laurylsulfate de sodium, le laurylether sulfate de sodium, les dodecylbenzene sulfonates de sodium et le chlorure d'hexadécyltriméthylammonium, ainsi que les mélanges de ces

composés.

Afin d'éviter la dégradation possible de l'amorceur il est parfois nécessaire de stabiliser le pH lors de la polymérisation. Selon l'un quelconque des modes de réalisation de l'invention, pour stabiliser le pH, tout tampon pH connu de l'homme du métier peut est utilisé. A titre d'exemple, on peut citer les tampons phosphate tels que le mélange de dihydrogénophosphate d'ammonium et d'hydrogénophosphate de di-sodium De manière préférée, dans le cas où le ou les tampons sont incorporés au milieu réactionnel, ils représentent de 1 à 20 pce, de préférence de 1 à 10 pce.

Pour une polymérisation radicalaire conduite en suspension, on utilise généralement des stabilisants. Les stabilisants employés dans la polymérisation en suspension peuvent être par exemple et de manière non exhaustive le poly(alcool vinylique), le poly(acrylate de sodium), l'hydroxyéthycellulose.

Selon l'un quelconque des modes de réalisation de l'invention, la polymérisation radicalaire est réalisée de manière conventionnelle sous atmosphère inerte, par exemple sous azote ou sous argon. La durée typique de la polymérisation est comprise entre 15 min et 48 h, plus communément entre 1 h et 24 h.

Selon l'un quelconque des modes de réalisation de l'invention, à l'issue de la polymérisation radicalaire, on stoppe la réaction de manière conventionnelle. Afin de stopper la réaction de polymérisation, il est connu de l'homme de l'art d'introduire un réducteur, le stoppeur. A titre d'exemple, on peut citer la famille des phénols tels que l'hydroquinone, le résorcinol, les hydroxylamines telles que la N, N-diethylhydroxylamine. De manière préférée, le ou les stoppeurs représentent de 0,05 à 5 pce, de préférence de 0,1 à 3 pce.

Selon l'un quelconque des modes de réalisation de l'invention, le procédé de synthèse du polymère fonctionnel peut se poursuivre de manière connue en soi par les étapes de récupération du polymère.

Selon des variantes, ces étapes peuvent comprendre une étape de stripping préalablement à la coagulation et au séchage du polymère.

Selon l'un quelconque des modes de réalisation de l'invention, l'étape de coagulation peut se dérouler dans un non-solvant du polymère obtenu. A titre d'exemple de non-solvant, on peut citer le méthanol ou un mélange de d'acétone/méthanol.

Cette étape de coagulation peut être substituée par une étape de déstabilisation du latex à l'aide d'un sel alcalino-terreux de manière connue en soi et couramment utilisée notamment en production industrielle de polymères en émulsion.

Selon l'un quelconque des modes de réalisation de l'invention, une étape de lavage du polymère fonctionnel peut être effectuée à l'issue de la coagulation du polymère.

Enfin, selon l'un quelconque des modes de réalisation de l'invention, une étape de séchage du polymère fonctionnel peut être effectuée et le polymère est récupéré. De préférence, le polymère fonctionnel peut être séché sous vide ou à pression atmosphérique sous balayage d'azote. Les températures de séchage peuvent varier de la température ambiante (25°C) à 130°C, préférentiellement de la température ambiante à 70°C, et encore plus préférentiellement de la température ambiante à 60°C. Les temps de séchage peuvent varier de 10 à 72 h, de préférence de 16 h à 50 h.

Le procédé de synthèse selon l'invention comprend la copolymérisation radicalaire d'au moins deux comonomères A et B, le comonomère A étant un monomère diène et le comonomère B étant un monomère porteur d'une fonction furane, substitué ou non.

Selon l'invention, le comonomère A est un monomère diène. Celui-ci peut être conjugué ou non.

A titre de monomère diène conjugué A, on entend plus particulièrement un monomère diène conjugué ayant de 4 à 12 atomes de carbone, comme par exemple le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène, le pipérylène et le chloroprène, et leurs analogues. Préférentiellement, le comonomère A est le butadiène-1,3 ou le 2-méthyl-1,3-butadiène, plus préférentiellement encore le butadiène-1,3. Ces monomères peuvent être utilisés seuls ou en combinaison de deux ou plus.

A titre de monomère diène non conjugué A, on entend plus particulièrement un monomère diène non conjugué ayant de 4 à 12 atomes de carbone, comme par exemple l'hexadiène-1,4, l'éthylidène norbornène, le dicyclopentadiène et leurs analogues.

Le comonomère A peut être utilisé seul ou en combinaison de deux ou plus choisis parmi les monomères diènes conjugués ou non. La quantité de comonomère A utilisée est telle que le taux molaire d'unités issues de ce monomère est généralement supérieur ou égal 40% et de préférence supérieur ou égal à 50% dans le polymère fonctionnel. Selon certains modes de réalisation de l'invention. La quantité de comonomère A utilisée est telle que le pourcentage molaire d'unités issues de ce monomère est de préférence supérieur ou égal à 55% , de préférence supérieur ou égal à 65% dans le polymère fonctionnel.

Selon l'invention, le comonomère B est choisi parmi méthacrylate de furfuryle et l'acrylate de furfuryle. Ces composés sont disponibles commercialement.

Le comonomère B peut être utilisé seul ou en combinaison de deux ou plus. La quantité de comonomère B utilisée est telle que le pourcentage molaire d'unités issues de ce monomère est de préférence supérieur à 0,5%,

notamment compris entre 0,5 et 10%, en particulier compris entre 0,8 et 5% molaire, dans le polymère fonctionnel.

Selon un mode particulier de l'invention, l'une au moins des conditions suivantes est remplies, de préférence les deux :

- le comonomère A est le butadiène-1,3,
- le comonomère B est le méthacrylate de furfuryle.

Selon un mode de réalisation de l'invention, particulièrement d'intérêt, au moins un autre comonomère C est copolymérisé avec les comonomères A et B. Cet autre comonomère C présente une double liaison éthylénique.

A titre de comonomère C, on peut citer par exemple :

- l'éthylène,
- les monomères $\alpha$-oléfines tels que le propylène, le 1-butène, l'isobutylène, le pentène, le méthylpentène, le 1-héxène, etc...,
- les monomères vinyliques tels que les vinyle aromatiques (le styrène et ses dérivés ainsi que les vinyle pyridines, les vinyle N-$C_1$-$C_6$-alkylepyrroles, les vinyle oxazoles, les vinyle thiazoles, les vinyle pyrimidines, les vinyle imidazoles, etc...),
- les esters acryliques, notamment les (méth)acrylates d'alkyle en $C_1$-$C_{20}$ (acide acrylique, acrylamide, acrylate de méthyle, acrylate d'éthyle, acrylate de butyle, acrylate d'hexyle, acrylate de 2-éthylhexyle, acide méthacrylique, méthacrylamide, méthacrylate de méthyle, méthacrylate d'éthyle, méthacrylate de butyle, méthacrylate d'hexyle, méthacrylate de 2-éthylhexyle),

Selon une variante avantageuse de l'invention, le comonomère C est choisi parmi les monomères vinylaromatiques comportant un radical styryle tels que par exemple le styrène, le 2- méthylstyrène, le 3-méthylstyrène, le 4-méthylstyrène, l'alpha-méthylstyrène, le 2,4-diméthylstyrène, le 2,4-diisopropylstyrène, le 4-ter-butylstyrène, le méthoxystyrène, le ter-butoxystyrène, le chlorostyrène, le chlorométhylstyrène, préferentiellement le styrène.

Selon une autre variante avantageuse de l'invention, le comonomère C est choisi parmi les monomères esters acryliques, notamment les méthacrylates d'alkyle en C1-C20 tels que méthacrylate de méthyle, méthacrylate d'éthyle, méthacrylate de butyle, méthacrylate d'hexyle, méthacrylate de 2-éthylhexyle

Le comonomère C peut être utilisé seul ou en combinaison de deux ou plus. Ainsi, les deux variantes avantageuses ci-dessus sont combinables. La quantité de comonomère C utilisée est telle que le pourcentage molaire d'unités issues de ce monomère dans le polymère fonctionnel est de préférence inférieur à 60%, voire inférieur à 50%, préférentiellement, selon certaines variantes, inférieur à 45%, voire 35%.

Selon un mode particulier de l'invention, l'une au moins des conditions suivantes est remplies, voire deux au moins, de préférence les trois :

- le comonomère A est le butadiène-1,3,
- le comonomère B est le méthacrylate de furfuryle et
- le comonomère C est le styrène ou un méthacrylate d'alkyle en $C_1$-$C_{20}$.

Il est entendu pour l'homme du métier que les différents modes de réalisation de l'invention décrits plus haut, dans leurs aspects génériques et dans leurs aspects préférentiels, sont combinables entre eux sous réserve de de leur compatibilité.

Le procédé de synthèse selon l'invention permet de préparer de manière contrôlée et sans modification post polymérisation, des polymères diéniques portant au moins un groupement fonctionnel furane au sein de sa chaîne. Le procédé selon l'invention est simple en ce qu'il permet en une seule étape de copolymérisation de conduire directement au polymère fonctionnel furane. Les conditions de polymérisation sont standards pour une polymérisation radicalaire et ne nécessitent pas de précautions particulières. Ce procédé de synthèse permet en outre un contrôle des propriétés du polymère telles que la Mn, le taux de furane,... de manière à répondre aux contraintes liées à son utilisation. Par ailleurs, les réactifs sont disponibles commercialement.

L'invention a également pour objet le polymère porteur d'au moins un groupement fonctionnel furane, substitué ou non, susceptible d'être obtenu par le procédé conforme à l'invention selon au moins l'un quelconque de ses modes de réalisation décrits précédemment. Selon certains modes de réalisation particuliers de l'invention, le polymère conforme à l'invention est de préférence un copolymère diénique comportant plusieurs groupements furane répartis de manière statistique le long de la chaîne.

Selon l'un quelconque des modes de réalisation de l'invention, le taux molaire de groupement fonctionnel furane, substitué ou non, au sein du polymère est d'au moins 0,5, préférentiellement ce taux varie de 0,5 à 50, plus préférentiellement de 0,5 à 10, en particulier de 0,8 à 5 pour 100 moles d'unités monomères constituant le polymère

conforme à l'invention.

Selon des modes de réalisation de l'invention préférentiels, la chaîne principale du polymère conforme à l'invention comprend des unités issues d'un ou de plusieurs monomères diènes et des unités issues d'un ou de plusieurs monomères porteurs d'un groupement furane, substitué ou non.

Selon d'autres modes de réalisation de l'invention encore préférentiels, la chaîne principale du polymère conforme à l'invention comprend des unités issues d'un ou de plusieurs monomères diènes, des unités issues d'un ou de plusieurs monomères porteurs d'un groupement furane, substitué ou non, et des unités issues d'un ou de plusieurs monomères éthyléniques non porteurs d'un groupement furane. De préférence selon ces modes de réalisation, les unités issues d'un ou de plusieurs monomères éthyléniques non porteurs d'un groupement furane sont des unités issues d'un ou de plusieurs monomères vinylaromatiques ou esters acryliques.

Le taux molaire d'unités issues de monomères diéniques A au sein du polymère pour 100 moles d'unités monomères constituant le polymère conforme à l'invention est généralement supérieur ou égal 40 et de préférence supérieur ou égal à 50, ou encore. Selon certains modes de réalisation de l'invention, ce taux est de préférence supérieur ou égal à 55, de préférence supérieur ou égal à 65.

Le taux molaire d'unités issues de monomères B au sein du polymère pour 100 moles d'unités monomères constituant le polymère conforme à l'invention, est de préférence supérieur ou égal à 0,5, et varie plus préférentiellement de 0,5 à 50, plus préférentiellement encore de 0,5 à 10, en particulier de 0,8 à 5.

Le taux molaire d'unités issues de monomères éthyléniques non porteurs d'une fonction furane C au sein du polymère pour 100 moles d'unités monomères constituant le polymère conforme à l'invention, est supérieur ou égal à 0. Lorsqu'il n'est pas nul, ce taux est généralement inférieur à 60, de préférence inférieur à 50, et, selon certains modes de réalisation de l'invention, il est inférieur à 45, de préférence inférieur à 35.

Les monomères sont tels que décrits plus haut.

Selon l'un quelconque des modes de réalisation de l'invention, l'une au moins des conditions suivantes est remplies, notamment deux des conditions, voire trois des conditions, de préférence toutes :

- les unités monomères diènes sont issues du 1,3-butadiène
- les unités monomères porteuses d'un groupement furane, substitué ou non, sont issues du méthacrylate de furfuryle
- lorsque le taux molaire d'unités monomères éthyléniques non porteurs d'une fonction furane est différent de 0, celles-ci sont issues du styrène ou méthacrylate d'alkyle en $C_1$-$C_{20}$
- la répartition des unités monomères est statistique.

Les polymères porteurs d'un ou plusieurs groupements fonctionnels furane, substitué ou non, au sein de la chaîne polymère selon l'invention, peuvent être utilisés en tant que tel ou en mélanges avec un ou plusieurs autres composés. La présence de groupements fonctionnels furane, substitué ou non, permet d'envisager une utilisation pour la réalisation de réseaux polymères thermoréversibles. Etant donné l'intérêt de ce type de réseaux polymères dans de nombreux domaines notamment pour leurs capacités auto-réparatrices ou auto-obturantes et leur capacité à être recyclés et, l'utilisation des polymères diénique fonctionnels furane, substitué ou non, selon l'invention peut être envisagée dans les domaines de la caoutchouterie où ces caractéristiques sont recherchées. On peut notamment citer la fabrication de divers produits finis à base de caoutchouc tels que les tuyaux, les courroies, les pneumatiques, les semelles de chaussures, les articles chirurgicaux...

Un autre objet de l'invention est un réseau de réticulation réversible par réaction du polymère diénique portant un ou plusieurs groupements fonctionnels furane avec un diénophile multifonctionnel.

Un autre objet de l'invention est une composition de caoutchouc à base au moins d'un polymère diénique portant un ou plusieurs groupements fonctionnels furane, substitué ou non, conforme à l'invention.

Par « composition de caoutchouc à base de », il faut entendre une composition de caoutchouc comportant le mélange et/ou le produit de réaction des différents constituants utilisés, certains de ces constituants de base étant susceptibles de, ou destinés à réagir entre eux, aux moins en partie, lors des différentes phases de fabrication de la composition, en particulier au cours de sa réticulation ou vulcanisation.

Selon des variantes de l'invention, la composition peut, outre le polymère conforme à l'invention, comprendre au moins une charge renforçante.

On entend par charge renforçante selon l'invention par exemple du noir de carbone, une charge renforçante autre que du noir de carbone, notamment de type siliceuse telle que de la silice à laquelle est associé de manière connue un agent de couplage, ou encore un mélange de ces deux types de charge.

Selon des variantes de l'invention, la composition peut, outre le polymère conforme à l'invention, comprendre au moins un autre élastomère diénique.

On entend par autre élastomère diénique selon l'invention, le caoutchouc naturel, les polybutadiènes (BR), les copolymères de butadiène, les polyisoprènes (IR), les copolymères d'éthylène-butadiène, les copolymères d'isoprène et les mélanges de ces élastomères. De tels copolymères sont plus préférentiellement choisis dans le groupe constitué

par les copolymères de butadiène et d'un monomère vinylaromatique, plus particulièrement le copolymère de butadiène-styrène (SBR), les copolymères d'isoprène-butadiène (BIR), les copolymères d'éthylène-butadiène, les copolymères d'isoprène et d'un monomère vinylaromatique, plus particulièrement le copolymère d'isoprène-styrène (SIR) et les copolymères d'isoprène-butadiène-styrène (SBIR).

Les compositions de caoutchouc conformes à l'invention peuvent comporter également tous ou partie des additifs usuels habituellement utilisés en fonction des domaines d'application de la composition, comme par exemple des pigments, des agents de protection, des agents anti-fatigue, des plastifiants, des résines renforçantes, des donneurs de méthylène (par exemple HMT ou H3M), un système de réticulation et les mélanges de tels composés.

Le système de réticulation peut être à base de soufre, de donneurs de soufre, de peroxydes, de poly-diénophiles ou de leurs mélanges. L'emploi de poly-diénophiles à titre d'agent de réticulation constitue un mode de réalisation préférentiel, puisque l'utilisation conjointe de poly-diénophiles et du polymère modifié conforme à l'invention, notamment préparé par le procédé conforme à l'invention mis en œuvre sous l'un quelconque de ses modes de réalisation décrits, permet l'obtention d'une composition de caoutchouc réticulée avec des propriétés de rigidité à moyenne déformation et de renforcement comparables à une composition de caoutchouc vulcanisée avec néanmoins des propriétés de recyclabilité et d'auto-obturation propres aux réseaux polymères thermosensibles.

Par poly-diénophiles selon l'invention, on entend un composé comportant au moins deux groupements diénophiles, notamment un composé comportant deux ou trois groupements diénophiles. Le préfixe « poly » n'est pas utilisé ici pour désigner un polymère. Par exemple, à titre de poly- diénophiles utiles aux besoins de l'invention, on peut citer les bis maléimides et les bis-citraconimides, ainsi que les tris-maléimides.

La fabrication des compositions de caoutchouc conformes à l'invention est bien connue de l'homme du métier. Les composés mentionnés ci-dessus et entrant dans la préparation de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse.

Un autre objet de l'invention est un produit fini comprenant dans un de ses éléments constitutifs une composition de caoutchouc à base d'au moins un polymère diénique portant un ou plusieurs groupements fonctionnels furane, substitué ou non, conforme à l'invention. Plus particulièrement, la composition de caoutchouc est telle que décrite plus haut selon l'une quelconque de ses variantes.

Le produit fini à base de caoutchouc peut être un tuyau, une courroie, un pneumatique, une semelle de chaussures, un article chirurgical...

Les caractéristiques précitées de la présente invention, ainsi que d'autres, seront mieux comprises à la lecture de la description suivante de plusieurs exemples de réalisation de l'invention, donnés à titre illustratif et non limitatif.

## II EXEMPLES DE REALISATION DE L'INVENTION

Les polymères sont caractérisés comme indiqué ci-après.

**II-1- Mesures** utilisées :

Chromatographie d'exclusion stérique (SEC) :

La chromatographie d'exclusion stérique (ou Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE. Il n'y a pas de traitement particulier de l'échantillon de polymère avant analyse. Celui-ci est simplement solubilisé, dans une solution de tétrahydrofurane contenant 1 % en volume de diisopropylamine, 1 % en volume de triéthylamine et 1 % en volume d'eau distillée, ou dans du chloroforme, à une concentration d'environ 1 g/l. Puis, la solution est filtrée sur filtre de porosité 0,45 μm avant injection. L'appareillage utilisé est un chromatographe « WATERS alliance ». Le solvant d'élution est du tétrahydrofurane contenant 1 % en volume de diisopropylamine et 1 % en volume de triéthylamine, ou du chloroforme selon le solvant utilisé pour la mise en solution du polymère. Le débit est de 0,7 ml/min, la température du système est de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ». Le volume injecté de la solution de l'échantillon de polymère est 100 μl. Le détecteur est un réfractomètre différentiel « WATERS 2410 » et le logiciel d'exploitation des données chromatographiques est le système « WATERS EMPOWER ». Les masses molaires moyennes calculées sont relatives à une courbe d'étalonnage réalisée à partir de polystyrènes étalons commerciaux « PSS READY CAL-KIT ».

Détermination du taux de macrogel

Le polymère (masse prélevée P) est mis en solution dans le toluène à une concentration à 5 g/L. Le milieu est agité pendant 6 h minimum puis filtré sur un filtre métallique (grille inox) préalablement pesé (P1). Le filtre est ensuite séché à 80°C sous vide pendant 1h puis refroidi dans un dessiccateur pendant 30 min. Après ce traitement la grille est pesée (P2).

Le taux d'insoluble ou encore taux de macrogel est donné par la formule

$$T= 100*(P2-P1)/P$$

Spectroscopie de résonance magnétique nucléaire (RMN)

Les déterminations des taux de fonctions greffées sur la chaine polymère sont réalisées par une analyse RMN. Les spectres sont acquis sur un spectromètre 500 MHz BRUKER équipé d'une sonde « large bande » BBIz-grad 5 mm. L'expérience RMN 1H quantitative, utilise une séquence simple impulsion 30° et un délai de répétition de 3 secondes entre chaque acquisition. Les échantillons sont solubilisés dans le chloroforme deuteré. Le spectre RMN 1H permet de quantifier le taux de motifs furane incorporé au sein de la chaine par intégration des signaux caractéristiques des protons -suivants :

5H Motif Styrène : 7.41ppm à 6.0ppm

1H PB1-2 +2H PB1-4 : 5.67ppm à 4.5ppm

1H méthacrylate de furfuryle : voir figure et tableau ci-dessous.

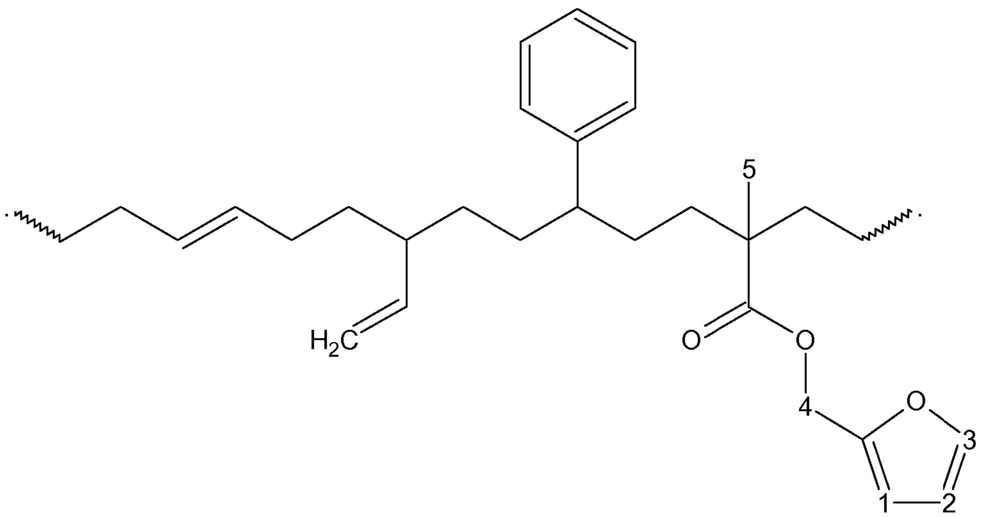

| $\delta^1H$ (ppm) | $\delta^{13}C$ (ppm) | Attribution |
|---|---|---|
| 7.16 | 138.5 | H3 |
| 6.19 | 170.6 | H1 |
| 6.14 | 170.7 | H2 |
| 4.87 | 54.3 | H4 |
| 1.00 | 18.4 | H5 |

**II-2- Préparation de polymères diéniques portant des groupements furane** :

**II-2-1- Réactifs**

Dans l'ensemble des exemples mentionnés ci-dessous, le sodium dodecylsulfate, le sulfate de fer, l'hydropéroxyde de cumène, le persulfate de potassium, le pyrophosphate de sodium, le tert-dodecylmercaptan, la N, N-diethylhydroxylamine, le methacrylate de furfuryle sont commercialisés par Aldrich. Le styrène et le butadiène sont purifiés par passage sur garde d'alumine et barbotage à l'azote.

**II-2-2- Synthèse des copolymères**

**a) Synthèse d'un SBR fonctionnel furane par polymérisation radicalaire en émulsion à chaud** :

Le SBR fonctionnel méthacrylate de furfuryle est préparé selon le protocole suivant :
Dans un réacteur de 250 millilitres est introduit le tensio-actif (Chlorure d'hexadécyltriméthylammonium(CTAC) = 5 pce) et l'amorceur (K2S2O8 = 1,2 pce). Le réacteur est ensuite est ensuite mis sous atmosphère inerte d'azote pendant 10 minutes. Sont alors introduits successivement dans le réacteur inerté, 900 pce d'eau, 4,5pce de H2PO4Na, 1,9 pce de H2PO4NH4, 0,25 pce de tert-dodecylmercaptan, 29,8% massique de styrène, 5,2% massique de méthacrylate de furfuryl et 65% massique de butadiène. Le réacteur est ensuite chauffé sous agitation à 40°C pendant 6 heures 20. Le milieu réactionnel est stoppé par introduction dans le réacteur de 0,98 pce de résorcinol.

| **conversion** | **%molaire de styrène** | **%molaire de butadiène** | **%molaire de méthacrylate de furfuryl** | **% de gel** | **Mn (Kg/mol)** | **Mw (kg/mol)** | **Ip** |
|---|---|---|---|---|---|---|---|
| 60% | 17,7 | 79,5 | 3,1 | <0,3% | 59 | 261 | 4.4 |

**b) Synthèse d'un SBR fonctionnel furane par polymérisation radicalaire en émulsion à froid:**

Le SBR fonctionnel méthacrylate de furfuryle est préparé selon le protocole suivant :
Dans un réacteur de 250 millilitres est introduit le tensio-actif (Sodium dodécylsulfate (SDS) = 3 pce). Le réacteur est ensuite inerté sous azote pendant 10 minutes. Sont alors introduits successivement dans le réacteur inerté, 240 pce d'eau, 0,16 pce de tert-dodecylmercaptan, 29,8% massique de styrène, 5,2% massique de méthacrylate de furfuryl, 65% massique de butadiène, le Na2FeP2O7 (0,28 pce de FeSO4,7H2O et 0,266 pce de Na4P2O7 chauffés préalablement en solution aqueuse inertée à 60°C pendant 45 minutes), et 0,17 pce d'hydropéroxyde de cumène. Le réacteur est ensuite agité à 5°C pendant 9 heures 10. Le milieu réactionnel est stoppé par introduction dans le réacteur de 0,1 pce N,N-diethylhydroxylamine.

| **conversion** | **%molaire de styrène** | **%molaire de butadiène** | **%molaire méthacrylate de furfuryl** | **% de gel** | **Mn (kg/mol)** | **Mw (kg/mol)** | **Ip** |
|---|---|---|---|---|---|---|---|
| 58% | 14,7 | 81,7 | 3,5 | <0,3% | 77 | 251 | 2,9 |

Par ces exemples, on montre qu'il est possible de synthétiser de manière simple et avec un rendement acceptable pour envisager une application industrielle, un polymère porteur de groupements fonctionnels furane au sein de sa chaîne, dont les caractéristiques sont compatibles avec une mise en œuvre dans un vaste domaine d'utilisation de la caoutchouterie. De plus, le procédé de l'invention permet une insertion contrôlée des groupements furane au sein de la chaîne polymère.

**Revendications**

1. Procédé de synthèse d'un polymère portant un ou plusieurs groupements fonctionnels furane au sein de sa chaîne, lequel procédé comprend la copolymérisation radicalaire d'au moins deux comonomères A et B, le comonomère A étant un monomère diène et le comonomère B étant un monomère porteur d'une fonction furane choisi parmi le méthacrylate de furfuryle et l'acrylate de furfuryle.

2. Procédé selon la revendication 1, **caractérisé en ce que** la copolymérisation radicalaire est réalisée en émulsion.

3. Procédé selon la revendication 1 ou 2, **caractérisé en ce que** la copolymérisation radicalaire est une copolymérisation statistique.

4. Procédé selon l'un quelconque des revendications 1 à 3, **caractérisé en ce que** le comonomère A est un monomère diène conjugué.

5. Procédé selon la revendication 4, **caractérisé en ce que** le comonomère A est le 1,3-butadiène.

6. Procédé selon l'un quelconque des revendications 1 à 5, **caractérisé en ce qu'**au moins un autre comonomère C est copolymérisé avec les comonomères A et B.

7. Procédé selon la revendication 6, **caractérisé en ce que**, cet autre comonomère C est choisi parmi :

   • l'éthylène,
   • un monomère $\alpha$-oléfine tel que le propylène, le 1-butène, l'isobutylène, le pentène, le méthylpentène, le 1-héxène, etc...,
   • un monomère vinylique tel que les vinylaromatiques
   • un ester acrylique, tel qu'un (méth)acrylate d'alkyle en $C_1$-$C_{20}$

8. Procédé selon la revendication 7, **caractérisé en ce que** le comonomère C est choisi parmi les monomères vinylaromatiques comportant un radical styryle, de préférence le styrène, et les monomères d'esters acryliques, de préférence les méthacrylates d'alkyle en $C_1$-$C_{20}$.

9. Polymère portant un ou plusieurs groupements fonctionnels furane au sein de sa chaîne, **caractérisé en ce qu'**il comprend, réparties de manière statistique, des unités issues d'un ou de plusieurs monomères diènes et des unités issues d'un ou de plusieurs monomères porteurs d'un groupement furane choisi parmi le méthacrylate de furfuryle et l'acrylate de furfuryle.

10. Polymère selon la revendication 9, **caractérisé en ce qu'**il comprend des unités issues d'un ou de plusieurs monomères éthyléniques non porteurs d'une fonction furane, de préférence des unités issues d'un ou de plusieurs monomères vinylaromatiques, préférentiellement du styrène, et/ou esters acryliques, préférentiellement un méthacrylate d'alkyle en $C_1$-$C_{20}$.

11. Polymère l'une quelconque des revendications 9 à 10, **caractérisé en ce que** le taux molaire d'unités issues de monomères porteurs d'un groupement furane au sein du polymère pour 100 moles d'unités monomères constituant le polymère est supérieur ou égal à 0,5, et varie plus préférentiellement de 0,5 à 50, plus préférentiellement encore de 0,5 à 10, en particulier de 0,8 à 5.

12. Réseau issu de la réticulation d'un polymère portant un ou plusieurs groupements fonctionnels furane au sein de sa chaîne tel que défini dans l'une quelconque des revendications 9 à 11 ou tel qu'obtenu avec le procédé défini dans l'une quelconque des revendications 1 à 8, avec un agent de réticulation diénophile polyfonctionnel tel qu'un bis-maléimide, un bis citraconimide ou un tris-maléimide

13. Composition de caoutchouc à base d'au moins un polymère défini selon l'une des revendications 9 à 11 ou tel qu'obtenu avec le procédé défini dans l'une quelconque des revendications 1 à 8.

14. Produit fini comprenant une composition de caoutchouc selon la revendication 13.

15. Produit fini selon la revendication 14, **caractérisé en ce qu'**il consiste en un pneumatique.

**Patentansprüche**

1. Verfahren zur Synthese eines Polymers, das eine oder mehrere furanfunktionelle Gruppen in seiner Kette trägt, wobei das Verfahren die radikalische Copolymerisation von mindestens zwei Comonomeren A und B umfasst, wobei es sich bei dem Comonomer A um ein Dienmonomer handelt und es sich bei dem Comonomer B um ein Monomer

mit einer Furanfunktion handelt, das aus Furfurylmethacrylat und Furfurylacrylat ausgewählt ist.

2. Verfahren nach Anspruch 1, **dadurch gekennzeichnet, dass** die radikalische Copolymerisation in Emulsion durchgeführt wird.

3. Verfahren nach Anspruch 1 oder 2, **dadurch gekennzeichnet, dass** es sich bei der radikalischen Copolymerisation um eine statistische Copolymerisation handelt.

4. Verfahren nach einem der Ansprüche 1 bis 3, **dadurch gekennzeichnet, dass** es sich bei dem Comonomer A um ein konjugiertes Dienmonomer handelt.

5. Verfahren nach Anspruch 4, **dadurch gekennzeichnet, dass** es sich bei dem Comonomer A um 1,3-Butadien handelt.

6. Verfahren nach einem der Ansprüche 1 bis 5, **dadurch gekennzeichnet, dass** mindestens ein weiteres Comonomer C mit den Comonomeren A und B copolymerisiert wird.

7. Verfahren nach Anspruch 6, **dadurch gekennzeichnet, dass** dieses weitere Comonomer C aus

- Ethylen,
- einem $\alpha$-Olefin-Monomer wie Propylen, 1-Buten, Isobutylen, Penten, Methylpenten, 1-Hexen usw.,
- einem Vinylmonomer wie Vinylaromaten,
- einem Acrylester, wie einem $C_1$-$C_{20}$-Alkyl (meth) - acrylat,

ausgewählt wird.

8. Verfahren nach Anspruch 7, **dadurch gekennzeichnet, dass** das Comonomer C aus vinylaromatischen Monomeren mit einem Styrylrest, vorzugsweise Styrol, und Acrylsäureester-Monomeren, vorzugsweise $C_1$-$C_{20}$-Alkylmethacrylaten, ausgewählt wird.

9. Polymer, das eine oder mehrere furanfunktionelle Gruppen in seiner Kette trägt, **dadurch gekennzeichnet, dass** es Einheiten, die sich von einem oder mehreren Dienmonomeren ableiten, und Einheiten, die sich von Monomeren mit einer Furanfunktion, die aus Furfurylmethacrylat und Furfurylacrylat ausgewählt sind, ableiten, in statistische Verteilung umfasst.

10. Polymer nach Anspruch 9, **dadurch gekennzeichnet, dass** es Einheiten, die sich von einem oder mehreren ethylenischen Monomeren, die keine Furanfunktion tragen, vorzugsweise Einheiten, die sich von einem oder mehreren vinylaromatischen Monomeren, vorzugsweise Styrol, und/oder Acrylsäureestern, vorzugsweise einem $C_1$-$C_{20}$-Alkylmethacrylat, ableiten, umfasst.

11. Polymer nach einem der Ansprüche 9 bis 10, **dadurch gekennzeichnet, dass** der molare Gehalt an Einheiten, die sich von Monomeren mit einer Furangruppe ableiten, in dem Polymer auf 100 mol Monomereinheiten, aus denen das Polymer aufgebaut ist, größer oder gleich 0,5 ist und weiter bevorzugt im Bereich von 0,5 bis 50, noch weiter bevorzugt von 0,5 bis 10, insbesondere von 0,8 bis 5, liegt.

12. Netzwerk, das sich aus der Vernetzung eines wie in einem der Ansprüche 9 bis 11 definierten oder mit dem in einem der Ansprüche 1 bis 8 definierten Verfahren erhaltenen Polymers, das eine oder mehrere furanfunktionelle Gruppen in seiner Kette trägt, mit einem polyfunktionellen dienophilen Vernetzungsmittel wie einem Bismaleinimid, einem Biscitraconimid oder einem Trismaleinimid ergibt.

13. Kautschukzusammensetzung auf Basis von mindestens einem Polymer gemäß einem der Ansprüche 9 bis 11 oder eines mit dem in einem der Ansprüche 1 bis 8 definierten Verfahren erhaltenen Polymers.

14. Erzeugnis, umfassend eine Kautschukzusammensetzung nach Anspruch 13.

15. Erzeugnis nach Anspruch 14, **dadurch gekennzeichnet, dass** es aus einem Reifen besteht.

**Claims**

1. Process for synthesizing a polymer bearing one or more furan functional groups within its chain, which process comprises the radical copolymerization of at least two comonomers A and B, the comonomer A being a diene monomer and the comonomer B being a monomer bearing a furan function chosen from furfuryl methacrylate and furfuryl acrylate.

2. Process according to Claim 1, **characterized in that** the radical copolymerization is carried out in emulsion.

3. Process according to Claim 1 or 2, **characterized in that** the radical copolymerization is a random copolymerization.

4. Process according to any one of Claims 1 to 3, **characterized in that** the comonomer A is a conjugated diene monomer.

5. Process according to Claim 4, **characterized in that** the comonomer A is 1,3-butadiene.

6. Process according to any one of Claims 1 to 5, **characterized in that** at least one other comonomer C is copolymerized with the comonomers A and B.

7. Process according to Claim 6, **characterized in that** this other comonomer C is chosen from

    - ethylene,
    - an α-olefin monomer such as propylene, 1-butene, isobutene, pentene, methylpentene, 1-hexene, etc.,
    - a vinyl monomer such as vinylaromatics,
    - an acrylic ester, such as a $C_1$-$C_{20}$ alkyl (meth)-acrylate.

8. Process according to Claim 7, **characterized in that** the comonomer C is chosen from vinylaromatic monomers comprising a styryl radical, preferably styrene, and acrylic ester monomers, preferably $C_1$-$C_{20}$ alkyl methacrylates.

9. Polymer bearing one or more furan functional groups within its chain, **characterized in that** it comprises, randomly distributed, units derived from one or more diene monomers and units derived from one or more monomers bearing a furan group chosen from furfuryl methacrylate and furfuryl acrylate.

10. Polymer according to Claim 9, **characterized in that** it comprises units derived from one or more ethylenic monomers not bearing a furan function, preferably units derived from one or more vinylaromatic monomers, preferentially styrene, and/or acrylic esters, preferentially a $C_1$-$C_{20}$ alkyl methacrylate.

11. Polymer according to either one of Claims 9 and 10, **characterized in that** the molar content of units derived from monomers bearing a furan group within the polymer, per 100 mol of monomer units constituting the polymer, is greater than or equal to 0.5, and ranges more preferentially from 0.5 to 50, even more preferentially from 0.5 to 10, in particular from 0.8 to 5.

12. Network resulting from the crosslinking of a polymer bearing one or more furan functional groups within its chain as defined in any one of Claims 9 to 11 or as obtained with the process defined in any one of Claims 1 to 8, with a polyfunctional dienophile crosslinking agent such as a bismaleimide, a bis-citraconimide or a trismaleimide.

13. Rubber composition based on at least one polymer defined according to one of Claims 9 to 11 or as obtained with the process defined in any one of Claims 1 to 8.

14. Finished product comprising a rubber composition according to Claim 13.

15. Finished product according to Claim 14, **characterized in that** it consists of a tyre.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20100099798 A1


### Littérature non-brevet citée dans la description


- *Macromolecules,* 2015, vol. 48 (11), 3539-3546
- *Macromolecules,* 2010, vol. 43, 6135
- *IUPAC, PAC,* 1996, vol. 68, 2287